# EUROPEAN PATENT SPECIFICATION

(11) **EP 3 488 693 B1**
(45) Date of publication and mention of the grant of the patent: **16.02.2022**
(21) Application number: 18386033.7
(22) Date of filing: 20.11.2018
(51) Int. Cl.: A01M 29/30, A01G 13/10

(54) **TREES' PROTECTOR FROM RODENTS AND OTHER ANIMALS**
SCHUTZ VON BÄUMEN VOR NAGETIEREN UND ANDEREN TIEREN
PROTECTEUR D'ARBRES CONTRE LES RONGEURS ET AUTRES ANIMAUX

(30) Priority: 22.11.2017 GR 20170100530
(43) Date of publication of application: 29.05.2019
(73) Proprietor: Maroudas, Dimosthenis, 28100 Argostoli Kefallinias (GR)
(72) Inventor: Maroudas, Dimosthenis, 28100 Argostoli Kefallinias (GR)
(74) Representative: Tsimikalis, Athanasios

(56) References cited:
- EP-A1- 1 032 256
- CN-U- 203 952 244
- GB-A- 2 392 602
- JP-A- 2017 085 901
- US-A- 539 344
- US-A- 1 875 533
- US-A1- 2003 024 156
- US-A1- 2008 023 128
- US-A1- 2016 278 306
- US-B1- 8 745 920

## Description

The invention refers to one protective sheet (6) consisting of the sheet (6) and two wired cables (2) fitted on the upper (3) and lower (4) sides of the sheets where they are tied (7) in order to be supported on the trunk.

### Background

It is known that some amateur efforts have been made regarding the protection of the trees from rodents and other animals, but they are apparently ineffective and not applicable to mass production. For instance, planes of sting, which embrace the perimeter of the trees, but to stabilize them, nails are used that hurt the tree or mesh metal or plastic mesh that embraces the trunk of the tree to protect it from the animals fed on the bark of the tree. However, they are ineffective for the protection from the rodents which can easily climb.

JP2017085901A discloses a device to prevent damage of fruits by wild animal. GB2392602A discloses a barrier type device to protect plants from garden pests. CN203952244U discloses a kind of device of pre-squirrel-preventing invasion and attack Walnut Fruit. US20160278306A1 discloses a Silicone Rubber Universal Fit Flexible Tree Trunk Guard. US20080023128A1 discloses a Squirrel barrier and method therefor. US20030024156A1 discloses a Squirrel combaton. US1875533A discloses a tree protector. US539344A discloses a tree protector.

The problem to be solved is how to protect a tree without hurting the tree, while allowing the tree trunk to breathe, and protecting the tree from rodents

### Description of the Invention

The advantages of this invention are the following:
A) They protect not only from the rodents but also from other animals such as insects, goats or deer and so on.
B) Besides, the plastic sheets do not hurt the tree since they are simply tied (7) on the upper and lower side, along the trunk with the wired cables.
C) Finally, due to the plastic material, the rodents and the insects would slip and they would not be able to hurt the tree's fruits which are on a higher level.

Therefore, we come to the conclusion that this invention is clearly more effective, easier to be applied and financially feasible for mass production.

The trees' protector in this invention refers to one sheet, of resistant, glossy, shiny and flexible plastic, one (6) meter height, which protect the fruit trees from the rodents, other animals and insects which are fed on the trees' fruits.

A first sheet of plastic, not covered by the claims, of half meter height (1), whose length depends on the size of each trunk, is flexible in order to embrace the trunk's perimeter and it is tied with wired cable passing lengthwise (4) through the parallel edges of the plastic sheet. This protector is removed after the harvest and it is stored.

The second sheet of plastic of one meter height (6), has round holes (8) from time to time along the length and height of the plastic sheet so that the tree's trunk would "breathe". Its size depends on the size of each trunk, it is flexible to embrace the trunk's perimeter and it is tied with wired cable passing lengthwise through (4) both parallel edges of the plastic sheet.

On one hand, it protects the tree from the rodents which are fed on the fruits and on the other hand it protects it all the time from animals fed on the trees' barks. According to the invention the plastic sheet of one meter height has its round holes at a long distance between them so a possible climbing from one hole to another by the rodents would be avoided.

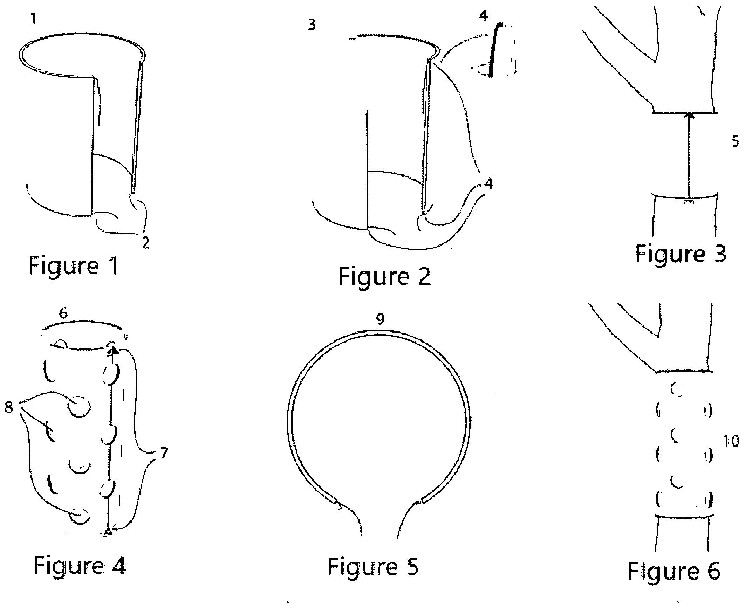

Figure 1 shows a perspective side view of half meter height (1) of the tree's protector, not covered by the claims.
Figure 2 shows the point where the wired cable (3,4) comes out of the sheet of the tree's protector which is tied (7) by the perimeter of the trunk.
Figure 3 shows the application method of the half meter height of the tree's protector, not covered by the claims, which is tied by the perimeter of the trunk (5).
Figure 4 shows a perspective side view of the one meter height (6) of the tree's protector with the holes (8).
Figure 5 shows the plan of both the half and the one meter tree's protector (9).
Figure 6 shows the application method of the one meter height sheet of the tree's protector, with round holes at a long distance between them in length and width, which is tied by the perimeter of the trunk (10).

## Claims

1. A tree protector for animals consisting of one plastic sheet of one meter height (6) configured to embrace a perimeter of a trunk of a tree (10), wherein the plastic sheet (6) is made of a resistant, glossy, shiny and flexible plastic material;
a plurality of substantially equally-sized round holes (8) along the length and height of the plastic sheet (6), wherein the plurality of round holes (8) are configured for allowing the trunk of the tree (10) to breathe, and wherein the round holes (8) are
(i) arranged in a lattice substantially covering the entire height of the plastic sheet, (ii) are substantially equidistant relative to their immediate neighbors and have a diameter that is smaller than the distance from their immediate neighbors and (iii) along the height of the plastic sheet (6) three round holes (8) are arranged; and
two wired cables (3, 4) fitted along the length of the plastic sheet (6), wherein the two wired cables (3, 4) are configured (a) to pass lengthwise through (4) both parallel edges of the plastic sheet (6) and come out of the sheet, and (b) for tying (7) the plastic sheet (6) to the perimeter of the trunk of the tree (10).

2. The use of a tree protector according to claim 1 for protecting a tree from animals that feed on a bark of the tree and allowing a tree trunk of the tree to breathe.

## Patentansprüche

1. Baumschutz für Tiere, bestehend aus einer Kunststofffolie mit einer Höhe von einem Meter(6), die so gestaltet ist, dass sie den Umfangeines Baumstamms (10) umschließt, wobei die Kunststofffolie (6) aus einem widerstandsfähigen, glänzenden und flexiblen Kunststoffmaterial hergestellt ist;
eine Vielzahl von im Wesentlichen gleich großen runden Löchern (8) entlang der Länge und Höhe der Kunststofffolie (6), wobei die Vielzahl von runden Löchern (8) so konfiguriert ist, dass der Stamm des Baumes (10) atmen kann und wobei die runden Löcher (8)
(i) in einem Gitter angeordnet sind, das im Wesentlichen die gesamte Höhe der Kunststofffolie abdeckt, (ii) im Wesentlichen in gleichem Abstand zu ihren unmittelbaren Nachbarn angeordnetsind und einen Durchmesser haben, der kleiner ist als der Abstand zu ihren unmittelbaren Nachbarn, und (iii) entlang der Höhe der Kunststofffolie (6) drei runde Löcher (8) angeordnet sind; und zwei verkabelte Kabel (3.4) die entlang der Länge der Kunststofffolie (6) angebracht sind, wobei die beiden verkabelten Kabel (3.4) so konfiguriert sind, dass sie (a) in Längsrichtung durch die beiden parallelen Kanten der Kunststofffolie (6) hindurchgehen (4) und aus der Folie herauskommen, und (b)zum Befestigen (7) der Kunststofffolie (6) am Umfang des Baumstamms (10).

2. Verwendungeines Baumschutzes nach Anspruch 1 zum Schutz eines Baumes vorTieren, die sich von der Rinde des Baumes ernähren und um den Baumstamm des Baumes atmen zu lassen.

## Revendications

1. Protecteur d'arbre pour animaux constitué d'une feuille de plastique d'un mètre de hauteur (6) configurée pour entourer un périmètre d'un tronc d'arbre (10) où la feuille de plastique (6) est constituée d'un matériau plastique résistant, brillant, lustré et flexible;
une pluralité de trous ronds (8) de taille sensiblement égale le long de la longueur et de la hauteur de la feuille de plastique (6), la pluralité de trous ronds (8) étant configurés pour permettre au tronc de l'arbre (10) de respirer et dans lequel les trous ronds (8) sont
(i) disposésen un treillis couvrant sensiblementtoute la hauteurde la feuille de plastique, (ii) sont sensiblement équidistants par rapport à leurs voisins immédiats et ont un diamètre qui est inférieur à la distance de leurs voisins immédiats et (iii) le long de la hauteur de la feuille de plastique (6) sont disposés trois trous ronds (8) ; et deux câbles câblés (3.4) installés le long de la longueur de la feuille de plastique (6), dans lequel les deux câbles câblés (3, 4) sont configurés (a) pour passer dans le sens de la longueur(4) les deux bords parallèles de la feuille de plastique (6) et sortir de la bâche, et (b) pour attacher (7) la bâche plastique (6) au périmètre du tronc de l'arbre (10).

2. Utilisation d'un protecteur d'arbre selon la revendication 1 pour protéger un arbre desanimaux qui se nourrissent d'une écorce de l'arbre et permettre à un tronc d'arbre de respirer.
